# EUROPÄISCHE PATENTSCHRIFT

(11) **EP 1 053 125 B1**
(45) Veröffentlichungstag und Bekanntmachung des Hinweises auf die Patenterteilung: **16.08.2006**
(21) Anmeldenummer: 99960938.1
(22) Anmeldetag: 09.12.1999
(51) Int. Cl.: B60R 5/04

(54) **HUTABLAGE MIT BEWEGLICHEN ECKSTÜCKEN**
REAR-WINDOW SHELF COMPRISING MOVEABLE CORNER PIECES
PLAGE ARRIERE COMPORTANT DES PIECES D'ANGLE MOBILES

(30) Priorität: 09.12.1998 DE 19856741
(43) Veröffentlichungstag der Anmeldung: 22.11.2000
(60) Teilanmeldung: 04007486.6
(73) Patentinhaber: BOS GmbH & Co. KG, 73773 Aichwald (DE)
(72) Erfinder: EHRENBERGER, Marina, D-73730 Esslingen (DE); WALTER, Herbert, D-73061 Ebersbach (DE)
(74) Vertreter: Rüger, Barthelt & Abel Patentanwälte
(86) Internationale Anmeldenummer: PCT/DE1999/003933
(87) Internationale Veröffentlichungsnummer: WO 2000/034078

(56) Entgegenhaltungen:
- EP-A- 0 066 514
- DE-C- 19 707 676
- FR-A- 2 395 861
- FR-A- 2 686 301
- US-A- 3 446 526

## Beschreibung

Bei Kompakt-PKW, die die Form von kleinen Kombi-PKWs aufweisen, reicht die Hutablage von der Hinterkante der Rücksitzlehne bis zur Heckklappe. Um den Zugang zu dem Laderaum unterhalb der Hutablage zu erleichtern, ist die Hutablage in der Fahrzeugkarosserie neben der Rücksitzlehne anscharniert. Aufgrund dieses Scharniers kann die Hutablage aus einer Horizontalstellung, in der sie auf seitlichen Auflagern aufliegt, in eine hochgeschwenkte Stellung überführt werden. Dies geschieht selbsttätig beim Öffnen der Heckklappe mit Hilfe von Zugschnüren oder anderen Koppelelementen, die die Heckklappe mit der Hutablage in der Nähe von deren Hinterkante verbinden.

Bei modernen Karosserieformen ist die Dachpartie, verglichen mit der Brüstung, relativ stark eingezogen, was dazu führt, dass sich die Heckklappenöffnung und die lichte Weite zwischen den Seitenwänden bzw. Seitenscheiben nach oben entsprechend stark verjüngt. Die Verjüngung der Heckklappenöffnurig wird noch verstärkt, wenn die Karosserie im Bereich der C-Säulen stark abgerundet ist, wie dies dem modernen Trend entspricht. Da gleichzeitig die Heckklappenöffnung schräg verläuft, tritt die hochgeschwenkte Hutablage mit ihrem Hinterkantenbereich aus der Laderaumöffnung heraus.

Damit die hochgeklappte Hutablage nicht mit den seitlichen Rändern der Heckklappenöffnung oder den Seitenscheiben bzw. C- Säulen kollidiert, muss sie entsprechend schmal ausgeführt sein. Dies wiederum erfordert innerhalb der Karosserie seitlich unterhalb der hinteren Seitenscheiben Füllstücke. Die Füllstücke ihrerseits beeinträchtigen das freie Lädevolumen, wenn zum Vergrößern des Laderaums die Hutablage herausgenommen und die Rücksitzlehne umgeklappt ist.

Grundsätzlich ähnliche Verhältnisse liegen bei Kombi-PKW vor, wenn deren Laderaum mit einer Laderaumabdeckung verschlössen wird. Die Laderaumabdeckung weist im Anschluss an die Rollobahn ein steifes Kontur- oder Formteil auf, dessen Außenkante einer Gürtellinie etwa folgt, die durch eine gedachte Schnittlinie definiert ist. Es ist die Schnittlinie zwischen einer gedachten Horizontalebene definiert durch die ausgespannte Rollobahn und der Innenseite der Laderaum- bzw. Heckklappenverkleidung.

Aus der gattungsgemäßen FR-A-2-395861 ist eine verstaubare Hutablage bekannt. Zur Aufbewahrung der nichtgebrauchten Hutablage ist hinter Rücksitzlehne eine Tasche vorgesehen, deren Breite.dem Abstand zwischen den Radhäusern entspricht. Um die deutlich breitere Hutablage darin unterzubringen, ist sie in drei Abschnitte gegliedert: ein rechteckiges Mittelstück und zwei Seitenklappen, die an dem Mittelstück anscharniert sind. Zum Verstauen werden die Seitenklappen auf das Mittelstück umgeschlagen. Es entsteht ein insgesamt rechteckiges Gebilde, das in die Tasche passt. Die Hutablage ist nicht an der Rücksitzlehne anscharniert, sondern liegt lediglich lose auf Auflagern auf. Eine Verbindung mit der Heckklappe ist nicht vorgesehen.

Ausgehend hiervon ist es Aufgabe der Erfindung, eine Hutablage zu schaffen, deren Breite nicht mehr durch die Breite der Heckklappenöffnung begrenzt wird.

Diese Aufgabe wird durch eine Hutablage mit den Merkmalen des Anspruches 1 gelöst.

Die neue Hutabläge überdeckt den Raum zwischen der geraden Kante der Rücksitzlehne und der Innenkontur der Heckklappe sowie der daran angrenzenden Bereiche.

Die Hutablage besteht aus drei Teilen, nämlich einem Mittelstück, das unmittelbar schwenkbar in dem Fahrzeug' gelagert ist, sowie zwei Seiten- oder Eckstücken, die mit dem Mittelteil über ein zugehöriges Scharnier verbunden sind. Durch Verschwenken der Eckstücke gegenüber dem Mittelteil verkleinert sich die effektive Breite des Mittelstücks, das sich bei verschwenkten Eckstücken nicht mehr zwischen den Seitenfenstern oder Seitenwänden verklemmen kann, oder mit den Rändern der Heckklappenöffnung kollidiert, wenn beim Öffnen der Heckklappe die Hutablage ein Stück weit aus der Heckklappenöffnung nach außen heraustritt.

Beispielsweise können die beiden Eckstücke, die vorzugsweise spiegelsymmetrisch bezüglich der Längsachse des Fahrzeugs sind, so anscharniert sein, dass sie beim Anheben der Hutablage nach unten klappen. Dieses Nachuntenklappen kann entweder aufgrund ihres Eigengewichts geschehen, wenn die Hutablage von entsprechenden karosseriefesten Auflagen angehoben wird oder indem die Eckstücke mit den Rändern der Hecköffnung zusammenstoßen und diese Ränder die Eckstücke beim weiteren Anheben nach unten drücken. Im letzteren Fall werden die Eckstücke durch entsprechende Vorspanneinrichtungen in eine Lage vorgespannt, in der sie etwa in der Ebene des Mittelstücks verlaufen.

Bei sehr steifen Mittelstücken kann es zweckmäßig sein, diese mit einer Sollbiegestelle zu versehen, die quer zu der Fahrzeuglängsachse verläuft. Hierdurch wird bei einem Heckaufprall verhindert, dass die Fontpassagiere von dem Mittelstück geköpft werden können.

Eine ästhetisch besonders ansprechende Oberseite der Hutablage ergibt sich, wenn diese zumindest auf der Oberseite des Mittelstücks einen durchgehenden Belag aufweist. Dieser Belag kann beispielsweise ein Teppichboden oder ein Filzbelag od.dgl. sein.

Das Eckstück kann aus zwei flächenhaften Formteilen bestehen. In diesem Falle ist das Scharnier ein Scharnier mit Scharnierbolzen. Diese können einstückig mit Formteilen an den Enden des Mittelstücks sein.

Wenn das Scharnier, über das das jeweilige Eckstück mit dem Mittelstück verbunden ist, ein Filmscharnier ist, kann hierzu ohne weiteres der Belag verwendet werden.

Die Richtung der Scharnierachse orientiert sich im Wesentlichen an den Karosserieverhältnissen. So kann die Scharnierachse parallel zur Fahrzeuglängsachse liegen oder sie kann schräg gegenüber dieser verlaufen. Im letzteren Fall haben die Eckstücke eine etwa dreieckförmige Gestalt mit einer entsprechend der Karosserie verrundeten außen liegenden Ecke.

Die Vorspannmittel zum Hochschwenken der Eckstücke umfassen je Eckstück zweckmäßigerweise eine Blattfeder. Diese ist raumsparend unterzubringen und vergrößert nur unwesentlich das Gewicht des Formteilmittels. Außerdem vergrößert ein derart gestaltetes Vorspannmittel die' Dicke des Formteilmittels nicht wesentlich. Diese könne.auch von einer Schenkelfeder gebildet sein, die im Eckstück untergebracht ist.

Um zu verhindern, dass das betreffende Eckstück von dem jeweiligen Vorspannmittel über eine Läge nach oben hinausgeschwenkt wird, in der das Eckstück mit dem Mittelstück in einer Ebene liegt, sind Anschlagmittel vorgesehen. Diese Anschlagmittel umfassen im einfachsten Falle zwei ineinandergreifende Haken, die miteinander in Eingriff kommen, wenn die gewünschte Endlage erreicht ist. Damit die Haken beim Herunterschwenken des Eckstücks dessen Bewegung nicht behindern, ist der an dem Mittelstück angebrachte Haken in Richtung auf die Mitte des Mittelstücks zurückversetzt.

Im Übrigen sind Weiterbildungen der Erfindung Gegenstand von Unteransprüchen.

In den Figuren sind Ausführüngsbeispiele des Gegenstandes der Erfindung dargestellt. Es zeigen:
Fig. 1 eine teilweise aufgebrochene Heckpartie eines Kompakt-PKW, in einer perspektivischen Darstellung bei flachgelegter erfindungsgemäßer Hutablage,
Fig. 2 die Anordnung nach Fig. 1, mit angehobener erfindungsgemäßer Hutablage, ebenfalls in einer perspektivischen Darstellung,
Fig. 3 einen Ausschnitt aus der Hutablage nach Fig. 1, unter Veranschaulichung des Filmscharniers der Anschlageinrichtung und der Vorspanneinrichtung, in einer Ansicht längs der Achse des Filmscharniers,
Fig. 4 die Anordnung aus Fig. 3 in einer Stellung, in der das Eckstück nach unten verschwenkt ist,
Fig. 5 ein weiteres Ausführungsbeispiel der Hütablage, in einer abgebrochenen perspektivischen Darstellung,
Fig. 6 die Hutablage nach Fig.5 mit geöffnetem Eckstück, in einer abgebrochenen perspektivischen Darstellung, und
Fig. 7 einen Schnitt durch die Heckpartie eines PKW zur Veranschaulichung der Unterstützung der Hutablage,

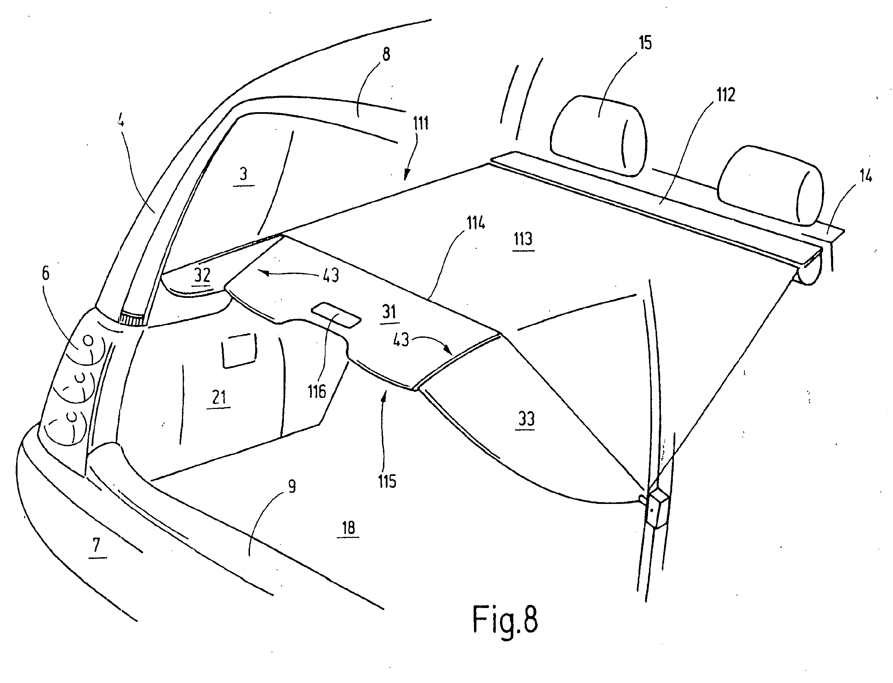

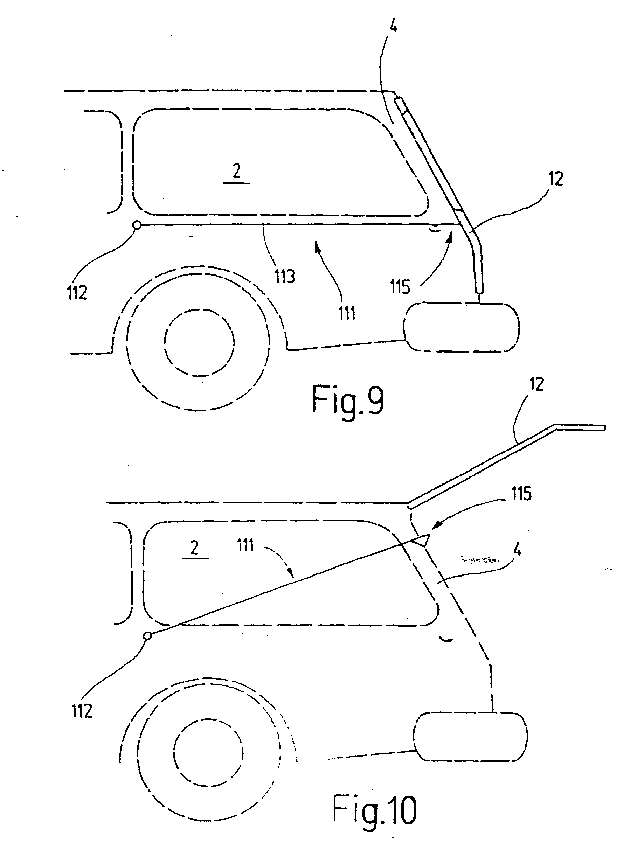

In der Figuren 8 bis 10 handelt es sich nicht um Ausführungsarten der Erfindung.

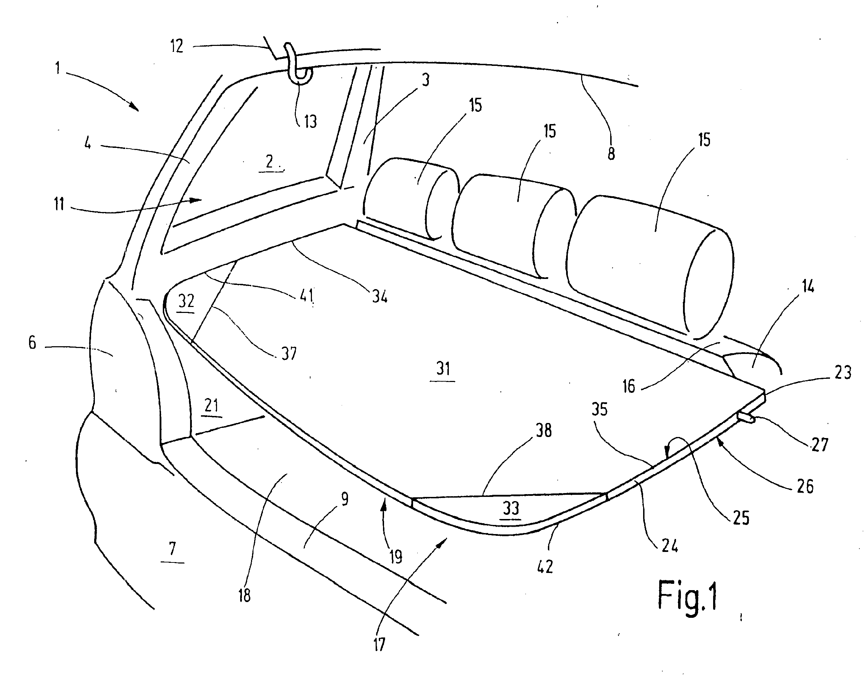

Fig. 1 zeigt schematisiert eine aufgebrochene Heckpartie 1 eines Kompakt-PKW. Von der Heckpartie 1 sind ein linkes hinteres Seitenfenster 2, eine B-Säule 3 sowie eine C-Säule 4 zu erkennen. Unterhalb der C-Säule 4 befindet sich eine kombinierte Blinker-Heckleuchtenanordnung 6, unter der ein Stoßfänger 7 verläuft.

Auf der weggebrochenen und demzufolge in Fig. 1 nicht erkennbaren Seite befinden sich ebenfalls eine B-Säule, ein hinteres Seitenfenster sowie eine C-Säule in spiegelbildlicher Anordnung. Zwischen den beiden C-Säulen 4 verläuft eine Dachhinterkante 8, die gleichzeitig zusammen mit den C-Säulen 4 und einer Laderaumunterkante 9 eine Heckklappenöffnung 11 begrenzt. Die C-Säulen 4 konvergieren nach oben und liegen schräg.

Eine die Heckklappenöffnung 11 verschließende Heckklappe ist in Fig. 1 bei 12 lediglich andeutungsweise zu erkennen. Die Heckklappe 12 ist mit Hilfe zweier Scharnierbänder 13 an der Unterseite der Dachhinterkante 8 anscharniert. Wegen der aufgebrochenen Darstellung ist von den beiden Scharnierbändern lediglich das linke zu erkennen.

Im Abstand von der Heckklappenöffnüng 11 befindet sich innerhalb der Heckpartie 1 eine bei 14 zu erkennende Rücksitzlehne 14 mit darauf stehenden Kopfstützen 15. Die Rücksitzlehne 14 endet an einer Oberkante 16, auf der die Kopfstützen 15 angeordnet sind.

Der Raum zwischen der Rückseite der Rücksitzlehne 14 und der Heckklappenöffnung 11 bildet einen Laderaum 17, der nach unten durch einen Laderaumboden 18 begrenzt ist.

Die Rücksitzlehne 14 ist, wie dies bei Kompakt-PKW üblich ist, aus der in der Fig. 1 gezeigten aufgerichteten, nahezu vertikal verlaufenden Stellung zumindest in eine horizontale Lage umlegbar, um den Laderaum 17 zu Lasten des vor der Rücksitzlehne 14 befindlichen Fahrgasträumes zu vergrößern.

Bei aufgerichteter Rücksitzlehne 14 ist der Laderaum, in Längsrichtung des Fahrzeugs gesehen, auf den Bereich zwischen der Heckklappenöffnung 11 und der Rückseite der Rücksitzlehne 14 beschränkt. Da er in der Regel auch in vertikaler Richtung nicht zur vollen Gänze benötigt wird, wird er nach oben durch eine Hutablage 19 abgedeckt.

Die Hutablage 19 verläuft im Ruhezustand etwa horizontal und verschließt die Öffnung, die von der geschlossenen Heckklappe 12, den Seitenwänden 21 des Laderaums 17 sowie der Rückseite der Rücksitzlehne 14 umgrenzt ist.

Die Hutablage 19 hat dementsprechend eine im Wesentlichen gerade vordere Kante 23, die parallel zu der Rückseite der Rücksitzlehne 14 verläuft sowie eine konturierte etwa bogenförmige Außenkante 24, die der Innengestalt der Seitenwände 21 und der Innenseite der Heckklappe 12 folgt. Ihre Oberseite 25 ist im Wesentlichen flach und verläuft parallel zu ihrer Unterseite 26.

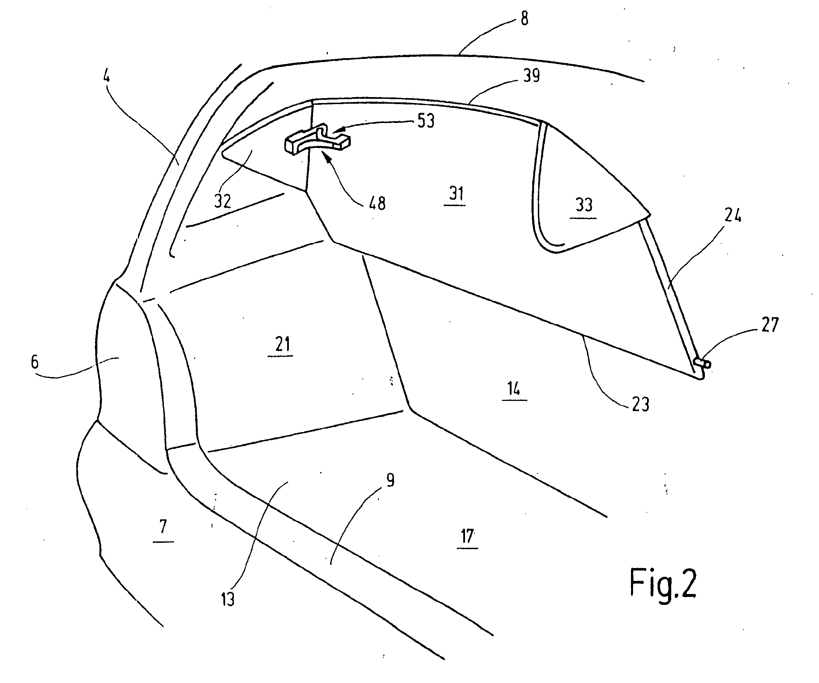

In der Nähe der vorderen geraden Kante 23 ist die Hutablage 19 mit zwei seitlich vorstehenden Lagerzapfen 27 versehen, von denen wegen der Darstellung lediglich der rechte zu erkennen ist. Die beiden Lagerzapfen 27 liegen auf einer gemeinsamen Achse und sie sind in nicht erkennbaren Lagerpfannen aufgenommen, die sich in der Karosserie an der entsprechenden Stelle befinden. Auf diese Weise ist die Hutablage 19 um eine zu der Querachse des Fahrzeugs parallele, horizontal verlaufende Achse aus der in Fig. 1 gezeigten Horizontalstellung in eine in Fig. 2 gezeigte hochgeklappte Stellung.hochzuschwenken.

Da der lichte Abstand innerhalb der Heckpartie 1 in jenem Bereich kleiner ist, in dem sich die Hinterkante der Hutablage 19 befindet, wenn sie hochgeschwenkt ist, verglichen mit der lichten Weite bei horizontal verlaufender Hutablage 19, ist die Hutablage 19 zumindest im Bereich ihrer Hinterkante, also in jenem Abschnitt der Umfangskante 24, die etwa parallel zu der Vorderkante 23 verläuft, in der Breite veränderlich. Zu diesem Zweck setzt sich die Hutablage 19 aus einem formsteifen etwa sechseckigen Mittelstück 31 und zwei an dem Mittelstück 31 anscharnierten ebenfalls formsteifen Eckstücken 32 und 33 zusammen.

Das Mittelstück 31 wird von der geraden Vorderkante 23, zwei etwa der Innenkontur der beiden Seitenwände 21 folgenden Kanten 34 und 35, zweier gerader, jedoch schräg verlaufender Kanten 37, 38 und einer Kante 39, die wiederum dem Verlauf der Innenkontur der Heckklappe 12 auf der Höhe der Hutablage 19 folgt. Die Kanten 37 und 38 konvergieren zu der Heckklappe 12 hin.

Während die Kanten 34, 35 und 39 Abschnitte der Umfangskante 24 der Hutablage 19 sind, schneiden die beiden Kanten 37 und 38 gleichsam Ecken ab.

An der Kante 37 beginnt mit einer damit korrespondierenden Kante das Eckstück 32, dessen Außenkante 41 den durch die Kante 37 fehlenden Bereich der Außenkante 24 ergänzt. Sinngemäß das Gleiche gilt für das Eckstück 33 mit dessen Außenkante 42.

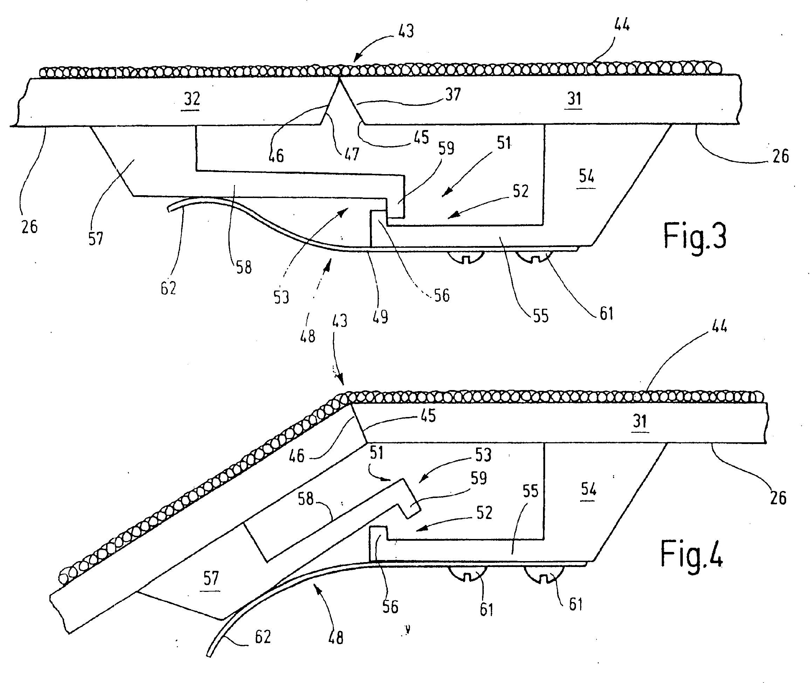

Die Verbindung des Eckstücks 32 mit dem Mittelstück 31 ergibt sich aus Fig. 3. Hiernach sind die beiden Teile über ein Filmscharnier 43 miteinander verbunden. Das Filmscharnier 43 Wird durch einen Belag 44, beispielsweise ein Filztuch oder ein Teppichbodenbelag, gebildet, der die gesamte Oberseite 25 der Hutablage 19 überdeckt.

Um das Verschwenken des Eckstücks 32 zu ermöglichen, ist das Mittelstück 31 längs der Kante 37 mit einer Abschrägung 45 versehen, ebenso wie dies das Eckstück 32 an seiner Seitenkante 46 ist. Hierdurch entstehen zwei in Richtung auf den Belag 44 konvergierende ebene Flächen 45 und 47, die mit der Oberseite 25 sowohl des Mittelstücks 31 als auch des Eckstücks 32 einen spitzen Winkel einschließen. Um die Achse des Filmscharniers 43, d.h. um die oben liegende Kante der Fläche 45, bzw. um die Kante 37 lässt sich das Eckstück 42 so weit nach unten klappen, bis die beiden Flächen 45 und 47 aneinanderliegen, wie dies Fig. 4 zeigt.

Eine Vorspanneinrichtung 48, im Wesentlichen in Gestalt einer Blattfeder 49, sorgt dafür, dass das Eckstück 32 entgegen der Wirkung der Schwerkraft nach oben gedrückt wird. Um zu verhindern, dass die Blattfeder 49 das Eckstück 32 höher als notwendig nach oben drückt, ist eine Anschlageinrichtung 51 vorhanden. Die Anschlageinrichtung 51 umfasst zwei Haken 52 und 53. Der Haken 52 besteht aus einem Fußteil 54, das an der Unterseite 26 des Mittelstücks 31 im Abstand von der Kante 37 angebracht ist. An dem von der Unterseite 26 abliegenden Ende des Fußteils 24 ist ein Arm 55 einstückig angeformt, der in Richtung auf das Eckstück 32 zeigt. Dieser Arm 55 trägt an seinem freien Ende einen zu der Unterseite 26 zeigenden Fortsatz 56, so dass der Arm 55 zusammen mit dem Fortsatz 56 den Haken 52 bildet.

Zu dem Haken 53 gehört ein an der Unterseite 26 des Eckstücks 32 angebrachter Fußteil 57, an dessen freiem, von der Unterseite 26 abliegenden Ende ein Arm 58 in Richtung auf den Haken 52 auskragt. An seinem freien Ende ist der Arm 58 mit einem von der Unterseite 26 wegweisenden Fortsatz 59 versehen. Die beiden Haken 52 und 53 sind, wie in Fig. 3 zu erkennen, so positioniert, dass sie mit ihren Fortsätzen 56 und 59 zusammenstoßen, wenn das Eckstück 32 in gerader Verlängerung des Mittelstücks 31 verläuft. Ein weiteres Hochschwenken des Eckstücks 32 um die Achse des Filmscharniers 43 wird durch die Anlage des Fortsatzes 59 an dem Fortsatz 56 blockiert.

Damit beim Herunterklappen des Eckstücks 32 gemäß Fig. 4 der Haken 53 nicht mit dem freien Ende des Armes 55 kollidiert, ist der Haken 52 gegenüber dem Filmscharnier 43 in Richtung auf die Mitte des Mittelstücks 31 zurückversetzt. Mit anderen Worten, die beiden Fortsätze 56 und 59 sind gegenüber einer Vertikalebene zurückversetzt, die die Achse des Filmscharniers 43 enthält.

Auf der nach unten zeigenden Seite des Armes 55 ist die bereits erwähnte Blattfeder 49 mittels zweier Befestigungsschrauben 61 angeschraubt, während ihr freies geschwungenes Ende 62 gegen den Arm 58 des Hakens 53 drückt.

Die Anordnung, wie sie anhand der Fig. 3 und 4 in Verbindung mit dem linken Eckstück 32 erläutert ist, gilt sinngemäß für das rechte Eckstück 33. Eine erneute Erläuterung ist demzufolge überflüssig.

Die Hutablage 19 ist in bekannter Weise mittels Schnüren mit der Heckklappe 12 verbunden; diese Schnüre sind mit Rücksicht auf die Übersichtlichkeit nicht dargestellt.

Die Funktionsweise der gezeigten Hutablage 19 ist wie folgt:

In der normalen Ruhestellung bei geschlossener Heckklappe verläuft die Hutablage 19 horizontal, d.h. ihre im Wesentlichen flache Oberseite 25 definiert eine horizontale Ebene. Sie verschließt die nach oben die durch das Seitenfenster 2 einsehbare Öffnung des Laderaums 17, die durch die Rückseite der Rücksitzlehne 14, den beiden Seitenwänden 21 und der Heckklappe 12 begrenzt ist. Zufolge der modernen eingezogenen Kontur ist die lichte Weite zwischen den Seitenwänden 21 auf einer Höhe, die der in Fig. 1 gezeigten Ruhestellung der Hutablage 19 entspricht, größer als es in einem näher der Dachhinterkante 8 liegenden Bereich zwischen den beiden C-Säulen 4 der Fall ist.

Wenn der Benutzer die Heckklappe 12 öffnet, um Zugang zu dem Laderaum 17 zu bekommen, wird automatisch mit dem Anheben der Heckklappe 12 auch die Hutablage 19 mit angehoben. Hierzu ist die Hutablage 19 beispielsweise in der Nähe der Kante 39 mittels Zugschnüren, die der Übersichtlichkeit halber in den Figuren nicht gezeigt sind, mit der Heckklappe 12 verbunden. Das Anheben der Heckklappe 12 führt dazu, dass die Hutablage 19 um die Lagerzapfen 27 herum nach oben schwenkt in die Stellung nach Fig. 2. Hierbei kommt ihr hinterer Bereich in eine Zone zwischen den C-Säulen 4 bzw. den Seitenscheiben 2, in der der lichte Abstand kleiner ist als unterhalb der Seitenscheiben 2. Die Eckstücke 32 und 33 werden deswegen im Verlauf der Aufwärtsbewegung gegen die Innenseiten der C-Säulen 4 oder der Seitenfenster 2 anstoßen und entgegen der Wirkung der Vorspanneinrichtung 48 nach unten gedrückt. Hierbei schwenken sie um die Achsen der Filmscharniere 44 nach unten. Die Achten der Filmscharniere 44 entsprechen der Kante 37 dort, wo sie in die Oberseite 25 einmündet.

Aufgrund der Eckstücke 32 und 33, die sich nach unten bewegen können und dadurch zu einer scheinbaren Verringerung der Breite der Hutablage 19 im Bereich ihrer Hinterkante führen, kann die Breite der Hutablage 19 so bemessen sein, dass sie den Raum zwischen den beiden Seitenwänden 21 unterhalb der beiden Seitenscheiben 2 nahezu vollständig ausnutzt. Es ist nicht notwendig, seitlich Füllstücke einsetzen zu müssen, um die Breite der Hutablage 19 auf jene Breite zu reduzieren, die dem Abstand zwischen den Karosserieseitenteilen an jener Stelle entspricht, in der der hintere Bereich der Hutablage 19 im hochgeschwenkten Zustand zu liegen kommt.

Es versteht sich, dass die schwenkbaren Eckstücke 32 und 33 auch von Vorteil sind, wenn beim Hochschwenken der Hutablage 19 deren hinterer Bereich (bezogen auf die normale Nomenklatur am Fahrzeug) aus der Hecköffnung 11 nach hinten austritt.

Beim Schließen der Heckklappe 12 bewegt sich die damit gekoppelte Hutablage 19 ebenfalls nach unten in einen Bereich, in dem der Abstand zwischen den C-Säulen 4 bzw. den angrenzenden Bereichen zunehmend größer wird. Entsprechend dem wachsenden Abstand schwenken die Endstücke 32 und 33 mittels der Vorspanneinrichtung 48 wieder nach oben solange, bis die beiden Haken 52 und 53 der Anschlageinrichtung 51 miteinander in Eingriff kommen und ein weiteres Hochdrücken der Eckstücke 32 und 33 blockieren. Mit dem Schlie-ßen der Heckklappe 12 ist wieder die in Fig. 1 erkennbare Stellung erreicht, in der die Oberseite der Eckstücke 32 und 33 in derselben Ebene verläuft wie die Oberseite des Mittelstücks 31.

Bei stark nach vorne geneigten C-Säulen 4 wird die Hutabläge 19 durch die entsprechend geneigte Heckklappe 12 unten gehalten, wenn bei einem Crash Gegenstände von Unten gegen die Hutablage 19 drücken. Bei einer steiler stehenden Heckklappe 12 kann die gleiche Wirkung erzielt werden, indem an deren Innenseite auf der entsprechenden Höhe nach innen weisende Fortsätze angebracht werden.

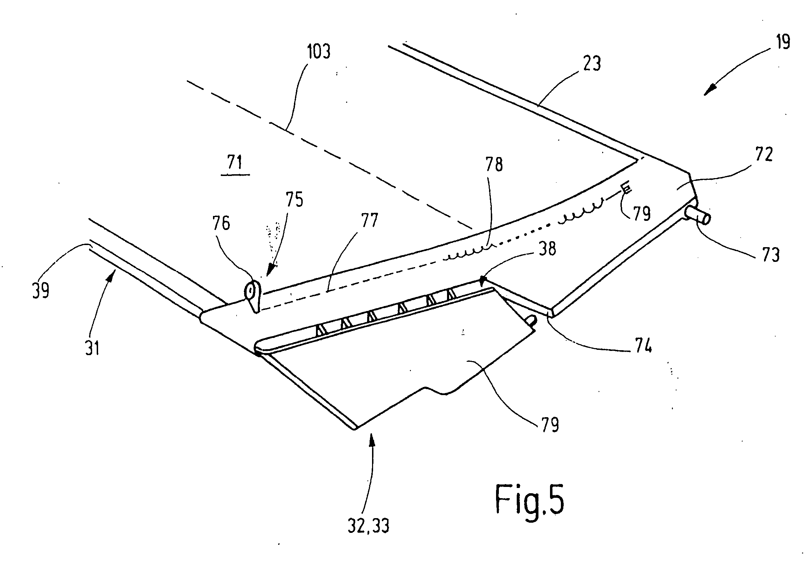

In Fig. 5 ist in einer abgebrochenen perspektivischen Darstellung ein anderes Ausführungsbeispiel der Hutablage 19 veranschaulicht; die Ansicht zeigt das rechte Ende. Bei diesem Ausführungsbeispiel werden, so weit es sich um Komponenten handelt, die bereits im Zusammenhang mit dem vorherigen Ausführungsbeispiel erläutert sind, dieselben Bezügszeichen verwendet und nicht erneut beschrieben.

Die Hutablage 19 besteht wiederum aus einem Mittelstück 31, an dem zwei Eckstücke 33 anscharniert sind. Wegen der abgebrochenen Darstellung ist in Fig. 5 lediglich ein Eckstück zu erkennen.

Das Mittelstück 31 setzt sich aus einem zentralen Teil 71 in Gestalt eines Blechzuschnittes zusammen, auf dem ein Filz- oder Fliestuch aufgezogen ist. An der Unterseite kann das zentrale Teil durch Streben verstärkt sein, die parallel zur Fahrzeuglängsachse verlaufen. Die Streben sind wegen der Darstellung nicht sichtbar.

Endseitig sind an dem zentralen Teil 71 zwei Kunststoffformteile 72 befestigt. Das Kunststoffformteil 72 enthält neben der vorderen Kante 23 eine Bohrung in der ein Achsbolzen 73 längsverschieblich geführt ist, der eine Scharnierachse darstellt, um die die Hutablage beim Öffnen der Heckklappe 12 nach oben geschwenkt wird. Der Scharnierbolzen 73 ist gegen die Wirkung einer Feder in das Kunststöffformteil 72 zurückzuziehen, um die Hutablage 19 aus dem Fahrzeug zu entnehmen. Der Scharnierbolzen 73 verläuft parallel zur vorderen Kante der Hutablage 19, die der Rücksitzlehne 14 benachbart ist.

Am gegenüber liegenden Ende bildet das Kunststoffformteil einen Ausschnitt 74, in dem das Eckstück 33 zu verschwenken ist.

Um die Hutablage 19 automatisch beim Öffnen der Heckklappe 12 ebenfalls anzuheben, ist ein Koppelmittel 75 vorhanden, das mit einem Verbindungselement in Form einer Kugelpfanne 76 an einem entsprechenden Zapfen der Heckklappe 12 anzuklipsen ist. Das Verbindungselement 76 ist an einem freien Ende einer gestrichelt gezeigten Zugschnur 77 befestigt, deren anderes Ende mit einer Zugfeder 78 verbunden ist, die bei 79 mit dem Mittelstück 31 starr verbunden ist. Im eingezogenen Zustand liegen die Zugfeder 78 und die Zugschnur 77 in einer nicht erkennbaren Rinne, die in dem Zentralteil 71 unterhalb des Kunststoffformteiles 72 ausgebildet ist. Die Zugschnur 77 führt durch eine Öffnung in der Oberseite des Kunststoffformteils 72 aus der Rinne nach außen. Die Öffnung liegt neben der Kante 39. Das Eckstück auf der anderen Seite ist spiegelbildlich ausgeführt.

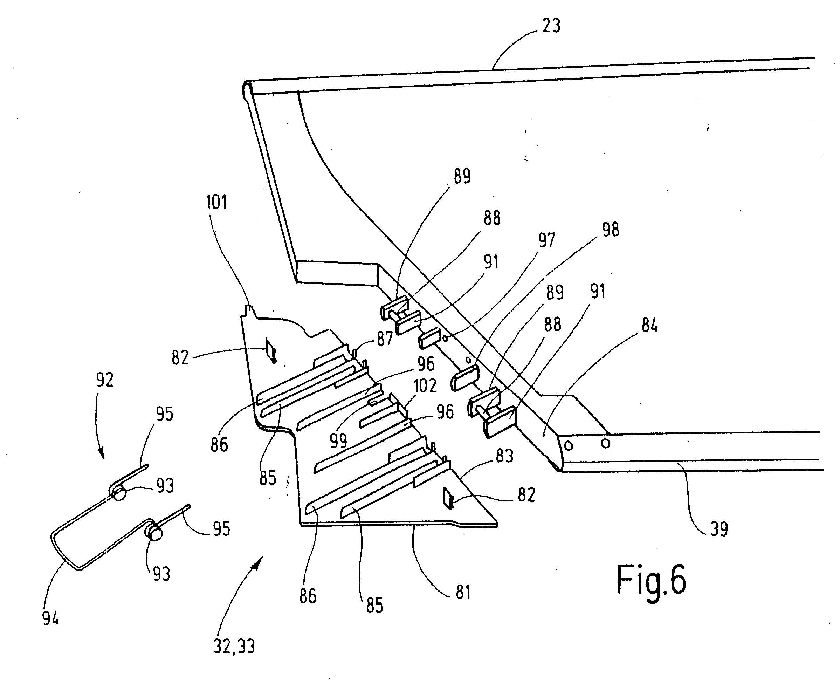

Die Art der Verbindung des Kunststoffformteils 72 mit dem Eckstück 33 zeigt Fig. 6, in der die linke Seite der Hutablage 19 veranschaulicht ist.

Das Eckstück 33 besteht ebenfalls aus einem starren Kunststoff und zwar wird es von einer oberen und einer unteren Platte 79 und 81 gebildet, die im Wesentlichen deckungsgleich sind und mit Abstand flächig einander gegenüber liegen. Mittels Rasthaken 82 sind sie unlösbar mit einander verrastet. Den Rasthaken 82 entsprechende und komplementäre Rasthaken befinden sich an der Unterseite des oberen plattenförmigen Teils 79. Da diese abgesehen von den Rasthaken keine besondere Struktur zeigt, erübrigt sich eine Darstellung von dieser Unterseite.

Wie Fig. 6 weiter erkennen läßt, wird das untere plattenförmige Teil 81 von einer geraden Kante 83 begrenzt, die gleichzeitig, die zu der Fahrzeuglängsachse gelegene Kante des Eckstückes 33 darstellt. Sie korrespondiert im übrigen mit einer geraden Stirnkante 84, die in Richtung auf die Fahrzeuglängsachse den Ausschnitt 74 an dem Mittelstück 31 begrenzt.

Auf der Ober- oder Innenseite des plattenförmigen Teils 31 sind eine Reihe von Stegen 85 und 86 ausgebildet, die rechtwinkelig zu der Kante 83 verlaufen und bis an diese heranreichen. Jeweils ein Steg 85 und ein Steg 86 bildet ein Stegpaar, das einen verhältnismäßig geringen Abstand von einander hat. Eines dieser Paare ist in der Nähe des einen Endes der Kante und das andere in der Nähe des anderen Endes vorgesehen. Die Stege 85 und 86 enthalten in der Nähe der Kante 83 nach oben offene Nuten oder Schlitze 87 mit einem halbrundförmigen Grund. Diese Schlitze 87 liegen sämtlichst auf einer Geraden, die zu der Kante 83 parallel verläuft.

Die Nuten oder Schlitze 87 dienen der Aufnahme von zwei Scharnierbolzen 88. Jeder der Scharnierbolzen 88 ist über ein Paar Laschen 89 und 91 einstückig mit der Stirnkante 84 verbunden. Die Laschen 89, 91 und der Scharnierbolzen 91 sind einstückiger bzw. integraler Bestandteil des betreffenden Kunststoffformteils 72. Die Scharnierbolzen 88 liegen auf einer gemeinsamen Achse, die parallel zu der Stirnfläche 84 verläuft.

Das Vorspannmittel zum Anheben des Eckstücks 33 besteht bei dem Ausführungsbeispiel nach den Fig. 5 und 6 aus einer aus Draht gebogenen Schenkelfeder 92. Sie bildet zwei zueinander koaxiale schraubenförmige gewundene Abschnitte 93, die einends über einen U-förmigen Bügel 94 verbunden sind und anderenends jeweils in einem freien Drahtende 95 enden. Die Schenkelfeder 92 wird zwischen zwei weiteren parallel zu einander verlaufenden Stegen 96 seitlich fixiert, während die freien Drahtenden 95 in entsprechende Aufnahmeöffnungen 97 in der Stirnfläche 84 hineinragen. Die schraubenförmigen Abschnitte 93 liegen auf dem plattenförmigen Teil 81, das U-förmige Mittelstück 94 stützt sich auf an der Unterseite des oberen plattenförmigen Teils 79 ab.

Zur seitlichen Fixierung der schenkelfeder 92 sind an der Stirnseite 84 zwei weitere Laschen 98 angeformt.

Damit weder die Laschen 89 und 91 noch die Laschen 98 mit dem unteren plattenförmigen Teil 81 kollidieren, wenn das Eckstück 32, 33 nach unten verschwenkt wird, enthält das untere plattenförmige Teil 81 ausgehend von der Kante 83 mehrere Einschnitte 99, die bis auf einen durch die Stege 85, 86 bzw. 96 verdeckt'sind. Die Einschnitte 99 korrespondieren mit den Laschen 88, 89 bzw. 98. Ihre Tiefe entspricht etwa der Höhe der betreffenden Lasche.

Um zu verhindern, dass die Schenkelfeder 92 das Eckstück 33 über die horizontale Lage nach oben drückt, ist eine Anschlagnase 101 vorhanden. Die obige Erläuterung gilt sinngemäß für beide Eckstücke 32, 33.

Die Montage geschieht wie folgt:
das vorgefertigte Zentralteil 71 wird endseitig mit den Kunststoffformteilen 72 bestückt. Zuvor wurde die Zugfeder 78 und die Zugschnur 77 in den entsprechenden Führungskanal eingelegt, wobei die Zugschnur 77 durch dei entsprechende Öffnung in der Oberseite des Kunststoffformteils 72 nach oben ragt. Sodann wird von unten her das untere plattenförmige Element 81 in den Ausschnitt 74 eingelegt, und zwar so, dass die Scharnierachsen oder -bolzen 88 in den zugehörigen Paaren von Schlitzen oder Nuten 87 zu liegen kommen. Sodann wird die Schenkelfeder 92 mit den freien Drahtenden 95 in die Öffnungen 97 eingesteckt, wobei die schraubenförmige gewundenen Abschnitte 93 an einem Steg 102 zur Anlage kommen, der an der Kante 82 ausgebildet ist.

Nach diesem Schritt wird das obere plattenförmige Element 97, das mit dem unteren Element 81 im Wesentlichen deckungsgleich ist, aufgeschnappt, bis die Rasthaken 82. ineinander greifen und die beiden Teile unlösbar mit einander verbinden.

Um eine optimale.Lagerung der Scharnierbolzen 88 zu gewährleisten, können an der Unterseite des oberen plattenförmigen Teils 79 weitere Stege vorhanden sein, die'den Stegen 85 und 86 mit den Nuten 87 entsprechen. Die halbkreisförmigen Bögen der Nuten 87 in dem oberen und dem unteren plattenförmigen Element 79, 81 können sich im montierten Zustand zu einem Kreis ergänzen, gesehen in Richtung parallel zu der Achse des betreffenden Scharnierbolzens 88, während die Stege seitlich nebeneinander liegen.

Wie bei dem vorherigen Ausführungsbeispiel wird das Eckstück 33 von der Schenkelfeder nach oben gedrückt, die sich mit dem U-förmigen Mittelstück 94 an der Unterseite des oberen plattenförmigen Elementes 79 abstützt. Der Bewegungshub, den die Schenkelfeder 92 dem Eckstück 32, 33 aufzwingen will, wird begrenzt, wenn die Nase 101 von unten gegen das Kunststoffformteil 72 anschlägt.

Wenn das Mittelstück 31 sehr biegesteif ausgeführt ist, besteht die Gefahr, dass die Passagiere auf den Rücksitzen bei einem Heckaufprall buchstäblich geköpft werden können. Um dies zu verhindern, enthält zumindest das Mittelstück 31 eine Sollbiegestelle 103, wie sie in Fig. 5 gestrichelt angedeutet ist. Längs dieser Linie läßt sich das Mittelstück 31 besonders leicht knicken. Bei einem Heckaufprall knickt das Mittelstück durch und richtet sich nach oben auf, so dass die Steifigkeit weitgehend verloren geht.

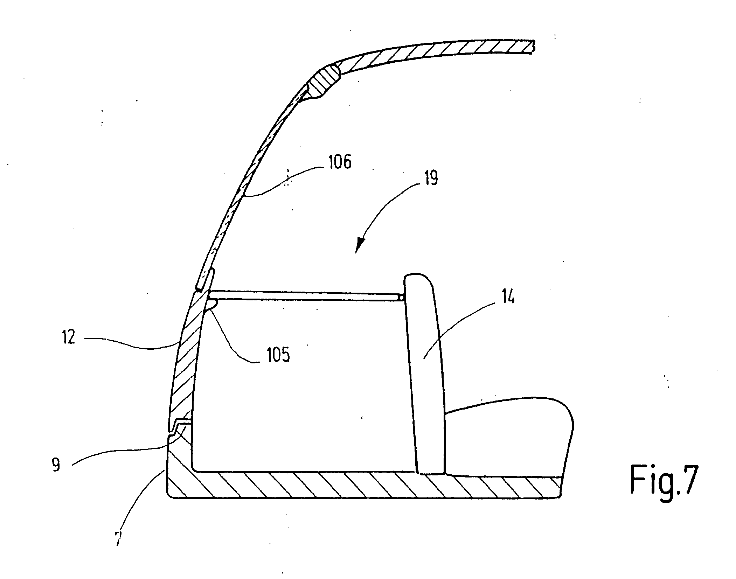

Fig. 7 veranschaulicht eine Lösung, wie die Tragfähigkeit der Hutablage 19 verbessert werden kann. Dazu ist der Hutablage 19 wenigstens eine Auflagekonsole 105 zugeordnet, die an der Innenseite der Heckklappe 12, unterhalb von dessen Heckscheibe 106 befestigt ist.

Die Auflagekonsole 105 ist möglichst weit zur Mitte der hinteren Kante 39 des Mittelstücks 31 gelegen. Hierdurch wird erreicht, dass die Hutablage 19 nicht nur neben den seitlichen Kanten, sondern auch in der Mitte unterstützt wird, wenn die Heckklappe geschlossen ist und die Hutablage 19 sich in ihrer horizontalen Stellung befindet.

Je nach Ausführungsform können eine oder mehrere Auflagekonsolen 105 vorgesehen sein.

Eine Hutablage setzt sich aus drei Abschnitten, einem Mittelabschnitt und zwei Eckstücken, zusammen, die seitlich an dem Mittelabschnitt anscharniert sind. Die Eckstücke können mit Hilfe des Scharniers verschwenkt werden, um im Bereich der Eckstücke durch Herunterschwenken derselben die Breite der Hutablage verringern zu können. Auf diese Weise wird der unterschiedlichen lichten Weite der Karosserie Rechnung getragen, die in der Regel unterhalb der Seitenfenster größer ist als einer näher an dem Dach gelegenen Stelle.

## Patentansprüche

1. Hutablage (19) für ein Personenkraftfahrzeug oder einen Kombi-PKW, das bzw. der einen nach außen durch eine Heckklappe (12) abgeschlossenen Laderaum (17) und eine normalerweise aufgerichtete und gegebenenfalls umlegbare Rücksitzlehne (14) aufweist, die von der Heckklappe (12) entfernt angeordnet ist,
wobei die Hutablage (19)
eine Unterseite (26) und eine im wesentliche flache Oberseite (25) aufweist,
in dem Fahrzeug hinter der Rücksitzlehne (14) derart anscharniert ist, dass die Hutabläge (19) um eine Horizontalachse nach oben schwenkbar ist,
von einer Außenkante (24) begrenzt ist, die zumindest ein Stück weit zumindest ungefähr einer Gürtellinie folgt, die sich als Schnittlinie zwischen einer durch die horizontal liegende Hutablage (19) definierten gedachten Ebene und dem Verlauf der Innenkontur des Laderaums (17) im Bereich der Heckklappe (12) und gegebenenfalls eines an die Heckklappe (12) angrenzenden Bereichs (21) gibt,
in ein Mittelstück (31) und zwei Eckstücke (32,33) aufgeteilt ist, die an dem Mittelstück (31) anscharniert sind und von denen wenigstens ein Teil ihrer Umfangskante (41,42) einen Abschnitt der Außenkante (24) der Hutablage (19) bildet, und
mit Vorspannmitteln (48,92) versehen ist, durch die Eckstücke (32,33) in eine Lage vorgespannt sind, in der die Oberseite (25) des jeweiligen Eckstücks (32,33) in Verlängerung der Oberseite (25) des Mittelstücks (31) verläuft.

2. Hutablage nach Anspruch 1, **dadurch gekennzeichnet, dass** das Mittelstück (31) formsteif ist.

3. Hutablage nach Anspruch 1, **dadurch gekennzeichnet, dass** das Mittelstück (31) mit einer Sollbiegestelle (103) versehen ist, die quer zu der Fahrzeuglängsachse verläuft, damit an dieser Stelle das Mittelstück (31) ausknickt, wenn ein Heckäufpräll stattfindet.

4. Hutablage nach Anspruch 1, **dadurch gekennzeichnet, dass** zumindest das Mittelstück (31) der Hutablage (19) einen durchgehenden Belag (44) aufweist, der ununterbrochen das Mittelstück (31) und die beiden Eckstücke (32,33) überdeckt.

5. Hutablage nach Anspruch 4, **dadurch gekennzeichnet, dass** der Belag (44) ein Teppichbelag ist.

6. Hutabläge nach Anspruch 1, **dadurch gekennzeichnet, dass** das Eckstück (32,33) aus einem oberen und einem unteren jeweils flächenhaften Kunststoffformteil (79,81) besteht, die miteinander verbunden sind.

7. Hutablage nach Anspruch 1, **dadurch gekennzeichnet, dass** das Scharnier (43), das das Mittelstück (31) mit dem jeweiligen Eckstück (32, 33) verbindet ein Filmscharnier ist.

8. Hutablage nach Anspruch 4 und 7, **dadurch gekennzeichnet, dass** der Belag (44) das Filmscharnier (43) bildet.

9. Hutablage nach Anspruch 1, **dadurch gekennzeichnet, dass** das Scharnier (43) ein Scharnier mit Scharnierachsen (88) ist.

10. Hutablage nach Anspruch 9, **dadurch gekennzeichnet, dass** die Scharnierachsen (88) mit Laschen (89, 91) einstückig sind und dass die Laschen (89, 91) und die Scharnierachsen (88) sowie jene Teile (72) an denen die Laschen (89,91) ausgebildet sind einstückige Kunststoffformteile sind.

11. Hutablage nach Anspruch 9, **dadurch gekennzeichnet, dass** das Scharnier (43) zur Aufnahme der Scharnierachse (88) Scharnierlagerstücke (85,86) aufweist, die als Stege an dem Eckstück (32,33) ausgebildet sind und Nuten (87) zur Aufnahme der Scharnierachse (88) enthalten.

12. Hutablage nach Anspruch 11, **dadurch gekennzeichnet, dass** die Stege (85,86) mit dem Eckstück (32,33) einstückig sind.

13. Hutablage nach Anspruch 1, **dadurch gekennzeichnet, dass** das Scharnier (43) derart gestaltet ist, dass das jeweilige Eckstück (32,33) nach unten schwenkbar ist.

14. Hutablage nach Anspruch 1, **dadurch gekennzeichnet, dass** die Scharnierachse (37, 38, 88) schräg zu der Fahrzeuglängschse verläuft.

15. Hutablage nach Anspruche 4, **dadurch gekennzeichnet, dass** die Scharnierachse (37, 38) paralell zu der Fahrzeuglängschse verläuft.

16. Hutablage nach Anspruche 1, **dadurch gekennzeichnet, dass** das Vorspannmittel (48) eine Blatterfeder (49) auf -weist, die vorzugsweise an dem Mittelstück (31) befestigt ist.

17. Hutablage nach Anspruche 1, **dadurch gekennzeichnet, dass** das Vorspannmittel (92) eine gewickelte Schenkelfeder mit zwei Federenden (95) ist.

18. Hutablage nach Anspruche 17, **dadurch gekennzeichnet, dass** die Schenkelfeder (92) zwei schraubenförmige Abshnitte (93) aufweist, die über einen U-förmig gebogenen Abschnitt (94) mit dem Eckstück (32, 33) und die Federenden (95) mit dem Mittelstück (31) verbunden sind.

19. Hutablage nach Anspruche 1, **dadurch gekennzeichnet, dass** Anschlagmittel (51) vorgesehen sind, die eine Bewegung der Eckstücke (32, 33) über eine Lage hinaus begrenzen, in der die Oberseite (25) des jeweiligen Eckstücks (32, 33) in Verlängerung der Oberseite (25) des Mittelstücks (31) verläuft.

20. Hutablage nach Anspruche 19, **dadurch gekennzeichnet, dass** zu den Anschlagmitteln (51) je Eckstück (32, 33) zwei Haken (52, 53) gehören, von denen der eine an einem jeweiligen Eckstück (32,33) und der andere an dem Mittelstück (31) von der Unterseite (26) beabstandet befestigt ist und die derart bemessen sind, dass sie ineinander greifen, wenn die Oberseite (25) des jeweiligen Eckstücks (32,33) in Verlängerung der Oberseite (25) des Mittelstücks (31) verläuft.

21. Hutablage nach Anspruch 19, **dadurch gekennzeichnet, dass** zu den Anschlagmitteln (51,101) eine Zunge (101) gehört, die an dem Eckstück (32,33) befestigt ist und das Mittelstück (31) untergreift.

22. Hutablage nach Anspruch 1, **dadurch gekennzeichnet, dass** ihr Kopplungsmittel (75) zugeordnet sind, die mit der Heckklappe (12) verbunden sind, derart, dass beim Öffnen der Heckklappe (12) die Hutablage (19) angehoben wird.

23. Hutablage nach Anspruch 22, **dadurch gekennzeichnet, dass** das Mittelstück (31) für das Kopplungsmittel (75) einen Kanal aufweist, der das Kopplungsmittel (75) aufnimmt und in dem sich eine Zugfeder (78) befindet, an der das Kopplungsmittel (75) einends befestigt ist.

24. Hutablage nach Anspruch 1, **dadurch gekennzeichnet, dass** ihr Auflagen (105) zugeordnet sind, die an der Heckklappe (12) derart befestigt sind, dass sie das Mittelstück (31) bei geschlossener Heckklappe (12) unterstützen.

## Claims

1. Parcel shelf (19) for an automobile or estate vehicle, which has a luggage area (17), which is closed to the outside via a tail gate (12), and a normally upright rear seat backrest (14), which can be folded down, if necessary, and is arranged at a distance from the tail gate (12),
wherein the parcel shelf (19)
has an underside (26) and a substantially flat upper side (25),
is attached by hinges behind the rear seat backrest (14) in the vehicle in such a manner that the parcel shelf (19) can be pivoted upwards around a horizontal axis,
is defined by an outer edge (24), which at least for a short distance follows at least approximately a parting line, which forms an intersecting line between an imaginary plane defined by the horizontally lying parcel shelf (19) and the curve of the inner contour of the luggage area (17) in the region of the tail gate (12) and possibly of a region (21) adjoining the tail gate (12),
is divided into a central piece (31) and two corner pieces (32, 33), which are hinged to the central piece (31) and of which at least a part of their peripheral edge (41, 42) forms a section of the outer edge (24) of the parcel shelf (19), and
is provided with biasing means (48, 92), through which the corner pieces (32, 33) are biased into a position, in which the upper side (25) of the respective corner piece (32, 33) runs in extension of the upper side (25) of the central piece (31).

2. Parcel shelf according to Claim 1, **characterised in that** the central piece (31) is dimensionally stable.

3. Parcel shelf according to Claim 1, **characterised in that** the central piece (31) is provided with a predetermined bending point (103), which runs transversely to the longitudinal axis of the vehicle, so that the central piece (31) buckles at this location when a rear-end collision occurs.

4. Parcel shelf according to Claim 1, **characterised in that** at least the central piece (31) of the parcel shelf (19) has a continuous covering (44), which covers the central piece (31) and the two corner pieces (32, 33) without any break.

5. Parcel shelf according to Claim 4, **characterised in that** the covering (44) is a carpet covering.

6. Parcel shelf according to Claim 1, **characterised in that** the corner piece (32, 33) comprises an upper and a lower, respectively sheet-like, plastic shaped part (79, 81), which are connected to one another.

7. Parcel shelf according to Claim 1, **characterised in that** the hinge (43), which connects the central piece (31) to the respective corner piece (32, 33) is a film hinge.

8. Parcel shelf according to Claim 4 and 7, **characterised in that** the covering (44) forms the film hinge (43).

9. Parcel shelf according to Claim 1, **characterised in that** the hinge (43) is a hinge with hinge pins (88).

10. Parcel shelf according to Claim 9, **characterised in that** the hinge pins (88) form one piece with lugs (89, 91), and that the lugs (89, 91) and the hinge pins (88) and also those parts (72), on which the lugs (89, 91) are configured, are single-piece plastic shaped parts.

11. Parcel shelf according to Claim 9, **characterised in that** to receive the hinge pin (88) the hinge (43) has hinge mounting sections (85, 86), which are configured as bars on the corner piece (32, 33) and contain grooves (87) to receive the hinge pin (88).

12. Parcel shelf according to Claim 11, **characterised in that** the bars (85, 86) form one piece with the corner piece (32, 33).

13. Parcel shelf according to Claim 1, **characterised in that** the hinge (43) is configured so that the respective corner piece (32, 33) can be pivoted downwards.

14. Parcel shelf according to Claim 1, **characterised in that** the hinge pin (37, 38, 88) runs obliquely to the longitudinal axis of the vehicle.

15. Parcel shelf according to Claim 4, **characterised in that** the hinge pin (37, 38) runs parallel to the longitudinal axis of the vehicle.

16. Parcel shelf according to Claim 1, **characterised in that** the biasing means (48) has a leaf spring (49), which is preferably fastened to the central piece (31).

17. Parcel shelf according to Claim 1, **characterised in that** the biasing means (92) is a coiled lever spring with two spring ends (95).

18. Parcel shelf according to Claim 17, **characterised in that** the lever spring (92) has two screw-shaped sections (93), which are connected to one another via a section (94) curved in a U shape, wherein the U-shaped section (94) is connected to the corner piece (32, 33) and the spring ends (95) are connected to the central piece (31).

19. Parcel shelf according to Claim 1, **characterised in that** abutment means (51) are provided, which restrict movement of the corner pieces (32, 33) beyond a position, in which the upper side (25) of the respective corner piece (32, 33) runs in extension of the upper side (25) of the central piece (31).

20. Parcel shelf according to Claim 19, **characterised in that** the abutment means (51) include two hooks (52, 53) for each corner piece (32, 33), one of said hooks being fastened to a respective corner piece (32, 33) and the other being fastened to the central piece (31) at a distance from the underside (26), and said hooks being dimensioned such that they interlock when the upper side (25) of the respective corner piece (32, 33) runs in extension of the upper side (25) of the central piece (31).

21. Parcel shelf according to Claim 19, **characterised in that** the abutment means (51, 101) include a tab (101), which is fastened to the corner piece (32, 33) and engages behind the central piece (31).

22. Parcel shelf according to Claim 1, **characterised in that** it has associated coupling means (75), which are connected to the tail gate (12) in such a manner that the parcel shelf (19) is raised when the tail gate (12) is opened.

23. Parcel shelf according to Claim 22, **characterised in that** the central piece (31) has a groove for the coupling means (75), which receives the coupling means (75), and in which groove a tension spring (78) is located, to which the coupling means (75) is fastened at one end.

24. Parcel shelf according to Claim 1, **characterised in that** it has associated supports (105), which are fastened to the tail gate (12) in such a manner that they support the central piece (31) when the tail gate (12) is closed.

## Revendications

1. Plage arrière (19) pour un véhicule de tourisme ou pour un break qui présente un espace de chargement (17) obturé vers l'extérieur par un hayon (12), ainsi qu'un dossier de banquette arrière (14) normalement dressé et éventuellement basculable, disposé à une certaine distance du hayon (12), étant précisé que
- la plage arrière (19) présente une face inférieure (26) et une face supérieure (25) qui est essentiellement plane,
- la plage arrière (19) est délimitée par un bord externe (24) qui au moins suit à peu près une ligne de ceinture qui se définit comme la ligne de section par un plan virtuel défini par la plage arrière (19) horizontale du contour interne de l'espace de chargement (17) dans la zone du hayon (12) et le cas échéant, dans une zone (21) contiguë à ce hayon (12),
- la plage arrière est divisée en une pièce médiane (31) et deux pièces d'angle (32, 33) reliées par des charnières à la pièce médiane (31) et dont au moins une partie de leurs bords périphériques (41, 42) constitue une partie du bord externe (24) de la plage arrière (19),
**caractérisée en ce que**
- la plage arrière, dans le véhicule, est montée sur une charnière derrière le dossier de banquette arrière (14) de manière à pouvoir basculer vers le haut autour d'un axe horizontal,
- la plage arrière est équipée de moyens de précontrainte (48, 92) qui tendent à amener les pièces d'angle (32, 33) dans une position où la face supérieure (25) de la pièce d'angle concernée (32, 33) se trouve dans le prolongement de la face supérieure de la pièce médiane (31).

2. Plage arrière selon la revendication 1, **caractérisée en ce que** la pièce médiane (31) est indéformable.

3. Plage arrière selon la revendication 1, **caractérisée en ce que** la pièce médiane (31) présente une zone de flexion imposée perpendiculaire à l'axe longitudinal du véhicule, afin que la pièce médiane (31) se plie sur cette zone quand a lieu un choc arrière.

4. Plage arrière selon la revendication 1, **caractérisée en ce qu'**au moins la pièce médiane (31) de la plage arrière (19) porte un revêtement continu qui couvre sans interruption la pièce médiane (31) et les deux pièces d'angle (32, 33).

5. Plage arrière selon la revendication 4, **caractérisée en ce que** le revêtement (44) est une moquette.

6. Plage arrière selon la revendication 1, **caractérisée en ce que** la pièce d'angle (32, 33) est constituée de deux pièces moulées en matière plastique, une supérieure (79 et une inférieure (81) reliées entre elles.

7. Plage arrière selon la revendication 1, **caractérisée en ce que** la charnière (43) qui relie la pièce médiane (31) à chaque pièce d'angle (32, 33) est une charnière pelliculaire.

8. Plage arrière selon les revendications 4 et 7, **caractérisée en ce que** le revêtement (44) constitue la charnière pelliculaire.

9. Plage arrière selon la revendication 1, **caractérisée en ce que** la charnière (44) est une charnière possédant des axes (88).

10. Plage arrière selon la revendication 9, **caractérisée en ce que** les axes de charnière (88) sont monoblocs avec des pattes (89, 91), et que ces pattes (89, 91), les axes de charnière (88) ainsi que les parties (72) sur lesquelles sont formées les pattes, sont réunis monoblocs sous la forme de pièces moulées en matière plastique.

11. Plage arrière selon la revendication 9, **caractérisée en ce que** la charnière (43) présente pour accueillir l'axe de charnière (88) des pièces de palier (85, 86) et qui sont constituées sur la pièce d'angle (32, 33), par des barrettes présentant des rainures (87) pour accueillir l'axe de charnière (88).

12. Plage arrière selon la revendication 11, **caractérisée en ce que** les barrettes (85, 86) sont monoblocs avec la pièce d'angle (32, 33).

13. Plage arrière selon la revendication 1, **caractérisée en ce que** la charnière (43) est configurée de manière que chaque pièce d'angle (32, 33) peut basculer vers le bas.

14. Plage arrière selon la revendication 1, **caractérisée en ce que** l'axe de charnière (37, 38, 88) est oblique par rapport à l'axe longitudinal du véhicule.

15. Plage arrière selon la revendication 4, **caractérisée en ce que** l'axe de charnière (37, 38, 88) est parallèle à l'axe longitudinal du véhicule.

16. Plage arrière selon la revendication 1, **caractérisée en ce que** le moyen de précontrainte (48) présente un ressort à lame (49) qui est de préférence fixé sur la pièce médiane (31).

17. Plage arrière selon la revendication 1, **caractérisée en ce que** le moyen de précontrainte (48) est un ressort à branches enroulées comportant deux extrémités (95).

18. Plage arrière selon la revendication 17, **caractérisée en ce que** le ressort à branches (92) présente deux parties (93) hélicoïdales reliées par une partie (94) recourbée en forme d'U qui est reliée à la pièce d'angle (32, 33) tandis que les extrémités de ressort (95) sont reliées à la pièce médiane (31).

19. Plage arrière selon la revendication 1, **caractérisée en ce que** des moyens de butée (51) sont prévus pour limiter le déplacement des pièces d'angle (32, 33) à une position dans laquelle la face supérieure (25) de chaque pièce d'angle (32, 33) se trouve dans le prolongement de la face supérieure (25) de la pièce médiane (31).

20. Plage arrière selon la revendication 19, **caractérisée en ce que** pour chaque pièce d'angle (32, 33), aux moyens de butée (51) appartiennent deux crochets (52, 53) dont l'un est fixé à une pièce d'angle (32, 33) et l'autre à la pièce médiane (31) en étant éloignés tous deux de la face inférieure (26), ces crochets étant dimensionnés de manière à être en prise l'un avec l'autre quand la face supérieure (25) de chaque pièce d'angle (32, 33) se trouve dans le prolongement de la face supérieure (25) de la pièce médiane (31).

21. Plage arrière selon la revendication 19, **caractérisée en ce qu'**aux moyens de butée appartient une languette (101) qui est fixée à la pièce d'angle (32, 33) et est en prise par-dessous avec la pièce médiane (31).

22. Plage arrière selon la revendication 1, **caractérisée en ce qu'**à la plage arrière sont associés des moyens de couplage reliés au hayon (12) de manière que, quand celui-ci s'ouvre, la plage arrière (19) se soulève.

23. Plage arrière selon la revendication 22, **caractérisée en ce que** la pièce médiane (31) présente pour le moyen de couplage (75) un canal qui accueille ce moyen de couplage et dans lequel se trouve un ressort de traction (78) auquel le moyen de couplage (75) est fixé par une extrémité.

24. Plage arrière selon la revendication 1, **caractérisée en ce qu'**à la plage arrière sont associés des appuis (105) fixés au hayon (12) de manière à soutenir la partie médiane (31) quand le hayon (12) est fermé.
